# EUROPEAN PATENT APPLICATION

(11) **EP 4 597 071 A1**
(43) Date of publication of application: **06.08.2025**
(21) Application number: 24382086.7
(22) Date of filing: 30.01.2024
(51) Int. Cl.: G01N 3/04, G01N 3/08, G01N 3/18

(54) **RIG FOR TESTING THERMOMECHANICAL LOADS**

(71) Applicant: AIRBUS OPERATIONS, S.L.U., 28906 Getafe (Madrid) (ES)
(72) Inventor: VAZQUEZ CASTRO, Jesus Javier, 28906 GETAFE (Madrid) (ES); TORAL VAZQUEZ, Javier, 28906 GETAFE (Madrid) (ES); JIMENEZ CHOZAS, Pablo, 28906 GETAFE (Madrid) (ES)
(74) Representative: Herrero & Asociados, S.L.

(57) **Abstract**

The rig for testing thermomechanical loads comprises grip portions (3) for gripping a test specimen (2), and a frame (1) that join the grip portions (3) to each other, the thermal expansion coefficient of the grip portions (3) being greater than the thermal expansion coefficient of the frame (1).

It permits to provide a test rig which is simplified with respect to the conventional test rigs, being cheaper than these known test rigs.

## Description

The present invention refers to a rig for testing thermomechanical loads, in particular, to a test rig designed to introduce bi-axial loads in a test specimen by means of thermal shrinkage/expansion combining thermomechanical loads.

### Background of the invention

There are many test rigs systems for biaxial, or even triaxial, tests. Typically, they consist of two actuators that apply a load in two directions, or even only one pair of actuators with a link system to apply the load in another direction. The same rig could be used for uniaxial load if needed.

Those test rigs systems could work in a variety of temperature levels. When it comes to cryogenic temperatures, partial or complete arrangement is submerged in a coolant.

For uniaxial testing in cryogenic conditions, there are several solutions in the industry. Mainly, they consist in a standard uniaxial testing machine, where the test specimen and the clamping area are enclosed in a cryostat, leaving the actuator outside.

Such technology for biaxial testing under cryogenic conditions is not as common as for uniaxial, but both rely on actuators to apply the load.

Those tests are quite expensive due to the machines required, the assembly effort per test specimen and the amount of cryogenic liquid needed to cool down all the set up.

### Description of the invention

Therefore, one purpose of the present invention is to provide a test rig which is simplified with respect to the conventional test rigs, being cheaper than these known test rigs.

With the test rig according to the present invention it is possible to solve said drawbacks, providing other advantages that are described below.

The test rig according to the present invention is defined in claim 1 and further additional optional features are defined in the dependent claims.

In particular, the rig for testing thermomechanical loads comprises grip portions for gripping a test specimen and a frame that join the grip portions to each other, the thermal expansion coefficient of the grip portions being greater than the thermal expansion coefficient of the frame.

Advantageously, the frame is made from a metallic material, in particular, from an alloy of iron and other metal, such as from an alloy of iron and nickel, for example, from an alloy of a 64% of iron and 36% of nickel.

Furthermore, the grip portions are preferably associated in pairs, and a spacer can be placed between both grip portions of the pair.

Advantageously, each grip portion is attached to the frame by only one attachment element.

Furthermore, the frame can comprise a stiffening element.

According to a possible embodiment, each grip portion comprises a plurality of fixing elements.

According to two alternative embodiments, the frame comprises only a first portion placed on one side of the grip portions, or the frame comprises a first portion and a second portion placed on two sides of the grip portions.

Furthermore, according to two alternative embodiments, the grip portions define two axes, or the grip portions define only one axis.

The main advantages of the test rig according to the present invention are the following:
The mechanical loading is achieved without the use of any actuator because the loading of the test specimen is done using the rig deformation due to the difference of temperature. Therefore, it is only needed a cold box to perform the test.

The assembly of the test rig is to be performed outside the cryostat, minimizing the set-up effort.

It permits a simplification of the cold box or cryostat as long as no connection between the test rig and the outside is needed.

The test campaigns are much cheaper than with standard test rigs.

The same rig can be used to do uniaxial tests in cryogenic conditions.

The test rig design is able to be used for different sizes and thicknesses of test specimens with minor adaptations.

### Brief description of the drawings

For a better understanding the above explanation and for the sole purpose of providing an example, some non-limiting drawings are included that schematically depict a practical embodiment.
Figure 1 is a plan view of the test rig according to a first embodiment of the present invention, with a test specimen placed in its position and placed inside a cryogenic chamber;
Figure 2 is a plan view of the test rig according to a second embodiment of the present invention, with a test specimen place in its position;
Figure 3 is a side sectional view of the test rig according to the first embodiment the present invention;
Figure 4 is a side sectional view of the test rig according to the first embodiment the present invention provided with a fixed frame provided with a first or upper portion and a second or lower portion; and
Figure 5 is a side sectional view of the test rig according to the first embodiment the present invention provided with fixing elements for fixing the test specimen to the grip portions.

### Description of preferred embodiments

The present invention refers to a rig for testing thermomechanical loads in test specimens 2, comprising a frame 1, which is fixed, and it is made preferably of any material with very low thermal expansion coefficient, Invar, for example, i.e., iron-nickel alloy, e.g. with a 64% of iron and 36% of nickel.

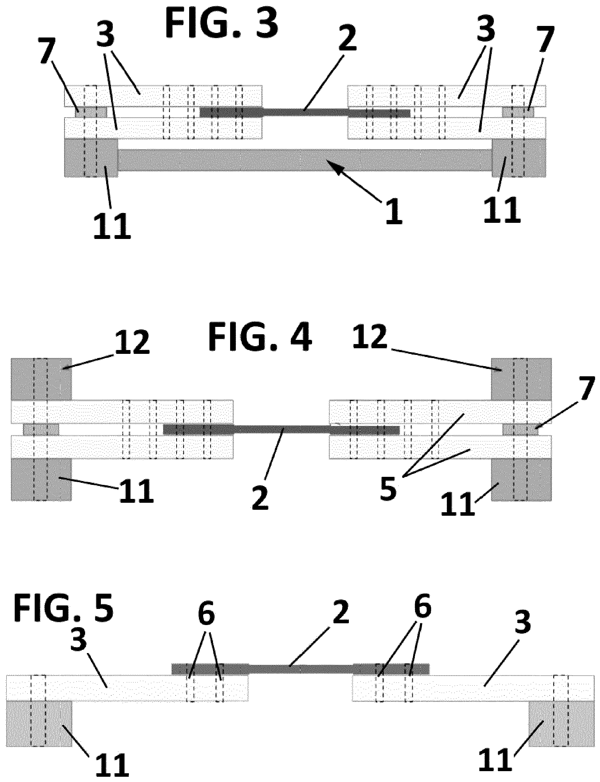

The frame 1 must be much stiffer than the test specimen 2, so to be able to actually apply load to the test specimen 2. To this end, the frame 1 can comprise a stiffening element 8, as shown in Figure 3.

The rig also comprises grip portions 3 to attach the test specimen 2 to the frame 1, and these grip portions 3 are made in any material with a high thermal expansion coefficient. The design and sizing of these grip portions 3 can be modified in accordance with the desired load level.

According to the embodiments shown, the grip portions 3 are associated in pairs, so that the test specimen 2 is placed between two grip portions 3 of said pair, and a spacer 7 is placed between said grip portions 3 of said pair.

By changing the features of the grip portions 3, e.g., their thickness, width, or lengths, the strain introduced in the test specimen 2 can be modified. By using different grip portions 3 in each direction, the ratio between the loading in each direction can be tailored.

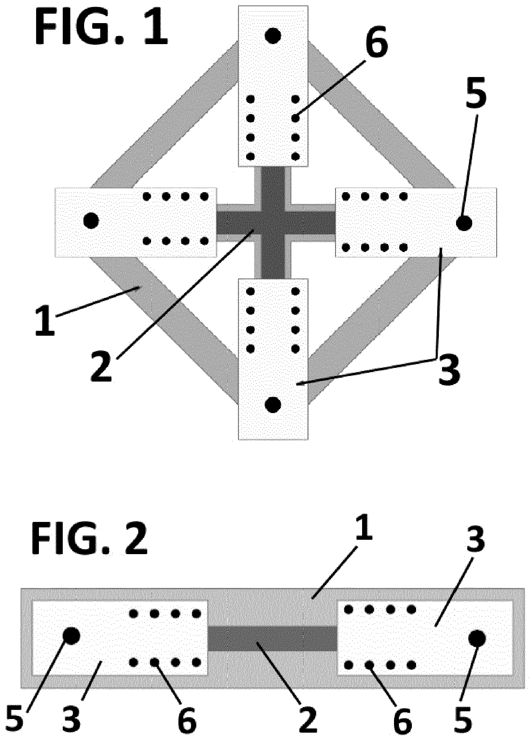

The frame 1 can be designed in any way that provides the required stiffness while allowing the assembly of the test specimen 2. For example, with additional connections as shown on the figure 1.

The rig can be immersed in cryogenic liquid, such as a cryogenic chamber (no shown), so that the different thermal expansion coefficients of the frame 1 and the grip portions 3, creates tension in the test specimen 2 without the need of any actuator.

Furthermore, the grip portions 3 are attached to the frame 1 by means of a single attachment element 5, such as a bolt, which helps the self-alignment of the test specimen 2.

The frame 1 can be made of one portion, such as a first or lower portion 11, shown in Figure 3, or two portions, including also a second or upper portion 12, shown in Figure 4, to increase the stiffness and stability. With the frame 1 comprising the first and second portions 11, 12, there is no risk of undesired bending out of the plane.

The attachment of the test specimen 2 to the grip portions 3 can be done by friction, i.e. the grip portions 3 are just in contact with the test specimen 2, or by direct fastening using fixing elements 6, as shown in Figure 5.

Also, the mass of the rig is important, because the higher the mass, the more cryogenic fluid will be needed to cool down the complete assembly.

If the fluid to be used is liquid Helium, the cost impact could be huge. Therefore, it is important to reduce the frame mass to the minimum possible while keeping its function.

In Figure 2 a second embodiment of the rig according to the present invention is shown, which is adapted to uniaxial testing, with a reduced mass with respect to the first embodiment shown in Figure 1.

## Claims

1. Rig for testing thermomechanical loads, comprising grip portions (3) for gripping a test specimen (2), **characterized in that** the rig also comprises a frame (1) that join the grip portions (3) to each other, the thermal expansion coefficient of the grip portions (3) being greater than the thermal expansion coefficient of the frame (1).

2. Rig for testing thermomechanical loads according to claim 1, wherein the frame (1) is made from a metallic material.

3. Rig for testing thermomechanical loads according to claim 1 or2, wherein the frame (1) is made from an alloy of iron and other metal.

4. Rig for testing thermomechanical loads according to anyone of the previous claims, wherein the frame (1) is made from an alloy of iron and nickel.

5. Rig for testing thermomechanical loads according to claim 4, wherein the frame (1) is made from an alloy of a 64% of iron and 36% of nickel.

6. Rig for testing thermomechanical loads according to anyone of the previous claims, wherein the grip portions (3) are associated in pairs.

7. Rig for testing thermomechanical loads according to claim 6, wherein a spacer (7) is placed between both grip portions (3) of the pair.

8. Rig for testing thermomechanical loads according to anyone of the previous claims, wherein each grip portion (3) is attached to the frame (1) by only one attachment element (5).

9. Rig for testing thermomechanical loads according to anyone of the previous claims, wherein the frame (1) comprises a stiffening element (8).

10. Rig for testing thermomechanical loads according to anyone of the previous claims, wherein each grip portion (3) comprises a plurality of fixing elements (6).

11. Rig for testing thermomechanical loads according to anyone of the previous claims, wherein the frame (1) comprises only a first portion (11) placed on one side of the grip portions (3).

12. Rig for testing thermomechanical loads according to anyone of claims 1-10, wherein the frame (1) comprises a first portion (11) and a second portion (12) placed on two sides of the grip portions (3).

13. Rig for testing thermomechanical loads according to anyone of the previous claims, wherein the grip portions (3) define two axes.

14. Rig for testing thermomechanical loads according to anyone of the claims 1-12, wherein the grip portions (3) define only one axis.
